# EUROPEAN PATENT SPECIFICATION

(11) **EP 1 338 838 B1**
(45) Date of publication and mention of the grant of the patent: **28.02.2007**
(21) Application number: 03380013.7
(22) Date of filing: 31.01.2003
(51) Int. Cl.: F16L 3/123, F16L 3/24

(54) **Clamp for tubular piping**
Rohrschelle für rohrförmige Leitungen
Collier de serrage pour conduites tubulaires

(30) Priority: 20.02.2002 ES 200200400
(43) Date of publication of application: 27.08.2003
(73) Proprietor: Isofix, S.L., 08192 Sant Quirze Del Valles (ES)
(72) Inventor: Yanguas Llobet, David, 08192 Sant Quirze del Valles (ES)
(74) Representative: SUGRANES - VERDONCES - FERREGÜELA

(56) References cited:
- EP-A- 1 022 503
- DE-U- 20 105 870
- FR-A- 1 136 750
- US-A- 1 462 671
- US-A- 2 375 513
- US-A- 3 856 245
- US-A- 4 119 285

## Description

### Technical sector of the invention

The invention refers to a clamp, which is especially applicable to the wall fastening of tubular piping, such as the piping used in heating or sanitary installations and, in general, to any type of fluids piping.

### Background to the invention

A wide variety of embodiments of clamps for the fastening of tubular piping are known. Among others, it is worth highlighting clamps with a closing cover, clamps without covers, clamps in which the cover is joined to the main body, clamps in which the cover is not joined to the main body, clamps made up of a single piece, clamps made up of more than one piece, clamps provided with a rod for fastening to a surface, clamps provided with means for fastening to guide rails assembled on walls or roofs.

The majority of the previously described clamps present the drawback of being fastened by means of a screw thread, which may form part of the clamp or, alternatively, can be coupled as an external element and which in most cases is situated in the centre of the base.

Different systems for fastening clamps exist, some incorporating a threaded nut, others incorporating internally threaded through orifices, but, in all cases, these means allowing the fastening of the clamps are situated at the clamp base, which, in all cases, is located in an area which is covered by the tubular piping, once the latter has been placed in its final position.

There exist systems which try to resolve this fact, as the document DE-U-20105870 which discloses a clamp for tubular piping, whereby it comprises a central portion, a first end portion and a second end portion connected to each of the respective ends of the central portion; all being adapted in such a way that, when the clamp is fastening a tubular piping, the first and second end portions are superimposed in an essentially parallel way and substantially tangential to the clamp body. In addition, the first and second ends comprise means for their coupling to support surface. These means comprise orifices adapted to receive a threaded element. However, in the clamp of DE-U-20105870 the pipe remains situated in the level of the support surface, and still makes difficult the clamp positioning, overcoat in those cases in that the clamp is used for curved parts of the tubular piping.

Document US-A-1 462 671 discloses a pipe clamp according to the preamble of claim 1 wherein the central portion is fitted with a support tab.

One of the drawbacks which the previously described clamps present, is the precision needed in the fitting of the fastening means of the same, since an excessive insertion of the screw, in the event of being situated from the clamp exterior or, alternatively, threaded from the interior, any unsuitable position of said screw can significantly affect the copper pipes and may even perforate them.

Another drawback which some of the previously mentioned clamps present is the need to use several screws; on the one hand, those enabling the fastening of the clamp to the corresponding wall or guide rail and, in addition, the screws which many clamps present and which allow the fastening of the tubular piping by means of the closing of same. It is obvious that, apart from meaning a significant amount of assembly time, the handling of so many elements increases the risk of losing control over one of them and could cause physical and/or material damage when working high up, for example, on building facades or the interior patios of buildings.

Another drawback deriving from the position of the fastening means at the clamp base is that it is impossible to dismantle a clamp that is supporting piping as the piping itself prevents access to the clamp fastening means. The same reasons prevent the positioning of additional clamps in an existing piping system whose fastening requires reinforcing.

### Explanation of the invention

With the object of contributing a solution to the earlier described problems, a clamp for tubular piping of new structure and functionality is herein disclosed.

Essentially, the clamp for tubular piping object of the invention comprises a central portion of essentially curved configuration, a first end portion and a second end portion, said first and second end portions being connected to each of the respective ends of the central portion; all being adapted in such a way that, when the clamp is fastening a tubular piping, the first and second end portions are superimposed in an essentially parallel way and substantially tangential to the clamp body, and wherein the central portion is fitted with a support tab which keeps the distance of the tubular piping with respect to the fastening surface and, in addition, it comprises two respective notches arranged in a first section of the second end portion for their coupling to guide rails.

According to another feature of the invention, the central portion is provided with at least one aperture, which provides it some flexibility.

According to a preferred embodiment, the support tab has anchoring means to the fastening surface.

According to a preferred embodiment of the invention, the first end portion has an essentially flat shape and has one orifice.

According to another feature of the invention, the second end portion is essentially "L" shaped, and has a first section and a second section with one orifice.

According to another form of preferred embodiment of the clamp for tubular piping of the invention, the second end portion has a projection that extends in the opposite direction to the support surface in an essentially parallel way to the first section of the end portion.

According to another feature of the invention, the means of coupling to the guide rail comprises two notches arranged in the respective projection laterals.

It is envisaged that at least the inner face of the central portion of the clamp of the invention incorporates protection means against vibration noise.

According to a preferred embodiment, the protection means against vibration noise consists of a profile of plastic material provided with extensions which configure two respective lateral grooves capable of coupling to the corresponding lateral ends of the central portion.

The previously described features of the clamp for tubular piping object of the present invention contributes solutions to the earlier described drawbacks which the disclosed embodiments of clamps for tubular piping present.

The clamp according to the invention laterally moves the clamp fastening point which is usually to be found on a plane which is perpendicular to the support plane and situated precisely behind the tubular piping. Thus, the handling of the clamp is possible, as well as the incorporation of additional clamps to a piping and the substitution of damaged clamps without overloading the piping with unnecessary tension.

In addition, the features of the clamp enable the latter to be incorporated to already existing piping in which a slight separation between the clamp and the fastening surface exists.

On the other hand, the clamp's configuration makes possible the coupling of two clamps in a common fastening point regardless of the dimensions of same.

### Brief description of drawings

An embodiment example of the clamp for tubular piping object of the present invention is represented in the drawings sheets of the present report. In said drawings,
Fig. 1 is a perspective view of a form of embodiment of the clamp according to the invention;
Fig. 2 shows another perspective view of the clamp of the invention;
Fig. 3 shows a lateral elevation view of the two clamps coupled at a common fastening point;
Fig. 4 shows a perspective lateral view of another form of embodiment of the clamp of the invention;
Fig. 5 shows a rear perspective view of the clamp of Fig. 4;
Fig. 6 is a view of the clamp in Fig.4 assembled on a guide rail;
Fig. 7 is a lateral perspective view of another form of embodiment of the clamp of the invention; and
Fig. 8 shows a view of another form of embodiment of the clamp of the invention.

### Detailed description of the drawings

The description which follows refers to the drawings explained earlier, making it possible to appreciate in detail the clamp for tubular piping according to the invention.

In the figures it can be observed that the clamp 1 for tubular piping comprises a central portion 2, a first end portion 3 and a second end portion 4 situated next to respective ends 5 and 6 of the central portion 2.

The central portion 2 has an essentially curved configuration and is provided with two apertures 7 and 8 which endow the central portion with a relative flexibility allowing, by pressure, the approximation of the two end portions 3 and 4.

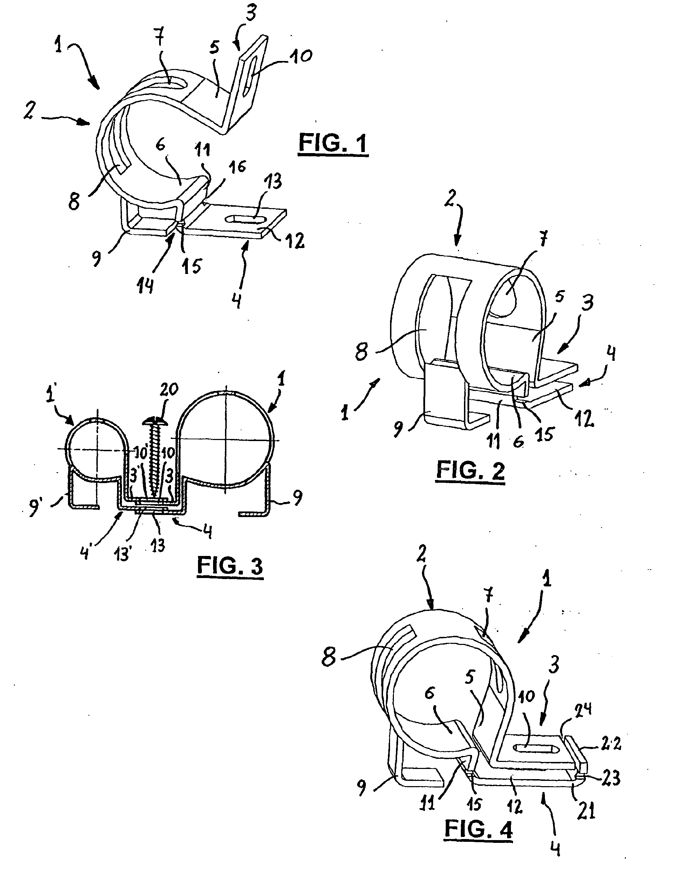

As can be appreciated in Figs. 1, 2, 3, 4 and 6, the material resulting from aperture 8 is bent, configuring a support tab 9, which acts as a reference element of the distance existing between the tubular piping and the support surface. This distance, which establishes the separation between the tubular piping and the support surface, is determined in such a way that it will enable the clamps to be handled, coupled and uncoupled from the tubular piping without the latter being subject to tension once it is placed in its final position.

In the embodiment examples shown in the figures, the first end portion 3 has an essentially flat shape and has an orifice 10 arranged essentially centred in the surface of the same.

As for the second end portion 4, it is essentially "L" shaped, differentiating a first section 11 arranged next to the end 6 of the central portion 2, and a second section 12, the first section 11 being lesser in length and arranged essentially perpendicular to the support surface, whereas the second section 12 is essentially flat shaped and has an orifice 13 arranged centred with respect to the surface.

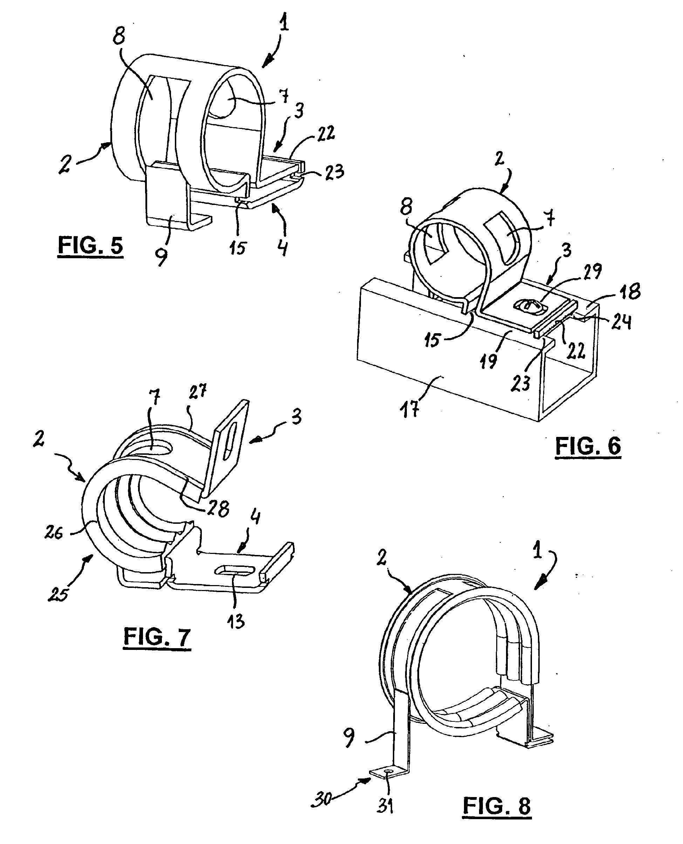

The first section 11 of the second end portion 4 is provided with means 14 of coupling to a guide rail 17 (Fig. 6) which, in the embodiment example shown in Figs. 1 to 3, comprises a pair of notches 15, 16 arranged laterally in said first section 11 of the second portion 2.

The notches 15, 16 have dimensions suitable for coupling to the flaps 18, 19 of the guide rail 17.

Fig. 3 shows the coupling of the clamps 1, 1' for fixing to the support surface at a common point by means of a single fastening element, represented by a screw 20. In spite of being of different diameters, the configuration of the clamps 1, 1' allow their coupling for fixing to a common point. This is achieved by establishing a distance from the tubular piping to the support surface which is equal in both cases by means of tabs 9 and 9'.

The coupling of the two clamps 1, 1', which can be of equal or different diameter, for fixing to the support surface at a common point by means of a single fastening element, is achieved by the insertion of the end portions 3, 3', 4 and 4' until making the orifices 10, 10', 13 and 13' coincide, in such a way that, by means of a fastening element, such as a screw, the position of the two clamps is assured.

Figs. 4, 5, 6, and 7 show another embodiment example of the clamp 1 for the fastening of tubular piping. In this embodiment, the free end 21 of the end portion 4 has a projection 22 which extends in the opposite direction to the support surface in an essentially parallel way form to the first section 11 of the end portion 4.

The projection 22 has a pair of notches 23, 24 arranged in each of their laterals and aligned in twos with the respective notches 15 and 16 of the first section 11 of the end portion 4.

Fig. 6 shows the clamp of Figs. 4 and 5 arranged on a guide rail. It can be appreciated that the second section 12 of the end portion 4 is arranged below the flaps 18 and 19 of the guide rail whereas the first end portion 3 is superimposed to section 12 on the opposite side of the guide rail flaps. The respective notches 15, 16, 23 and 24 of those respective to section 11 and projection 22 of the end portion 3, house in their interior the flaps 18 and 19 of the guide rail 17. When the end portions 3 and 4 are pressed against each other, they exert pressure on the flaps 18, 19 of the guide rail 17, which assure the position of the clamp on the guide rail.

In Fig. 7, another embodiment example of the clamp is shown. In said embodiment, the central portion 2 of the clamp incorporates protection means 25 against vibrations.

The protection means 25 against vibrations consists of an element of material which is capable of absorbing the vibrations produced between the tubular piping and the clamp. In the example shown, the protection means 25 consists of a rubber profile 26 that covers the inner surface of the central portion 2 of the clamp and is secured to the same by means of extensions 27, 28, which configure two respective lateral slots, capable of coupling to the corresponding lateral ends of the central portion 2.

According to the embodiment example shown in Fig. 8, the support tab 9, of the central portion 2 has anchoring means 30 for fastening to the support surface. In the example shown, the anchoring means 30 consists of an orifice 31. These anchoring means 30 allows the clamp to be fixed to the support surface by two points instead of just one, being especially useful in cases in which the clamp has to support significant weights.

Alternatively, the support tab 9 of the central portion 2 can be bent towards the clamp body and, in this way, not only leans on the support surface, but its free end rests on the lower part of the central portion of the clamp, reducing the tension that the latter supports because of the pressure from the tubular piping.

Obviously, the clamp can be shaped from any material that has the characteristics allowing for a certain amount of flexibility in the central portion. In any case, the preferred materials are stainless steel, plasticised iron and galvanised iron.

Below a general operative process is described, for the use of clamps for tubular piping according to the invention, which is applicable to the different embodiments described earlier. Initially, the clamp is provided in semi-open position (Figs. 1 and 7), the tubular piping is placed in its interior and the end portions 3 and 4 are pressed together until the respective orifices 10 and 13 adopt a facing position which permits the insertion of a fastening element, such as a screw 20 to carry out the definitive tightening of the portions which, in the event of the clamp being placed directly on the support surface, will be the fastening element itself and, in the event of the clamp being coupled on a guide rail previously fixed to the wall, the screw 29 assures the position of the clamp on the guide rail 17.

## Claims

1. Clamp (1) for tubular piping, of the type formed from a piece of metallic strip, that comprises a central portion (2) of essentially curved configuration, a first end portion (3) and a second end portion (4), said first and second end portions (3, 4) being connected to each of the respective ends (5, 6) of the central portion (2); all being adapted in such a way that, when the clamp is fastening a tubular piping, the first and second end portions (3, 4) are superimposed in an essentially parallel way and substantially tangential to the clamp body, wherein the central portion (2) is fitted with a support tab (9) which keeps the distance of the tubular piping with respect to the fastening surface; **characterised in that** it comprises two respective notches (15, 16) arranged in a first section (11) of the second end portion (4) for their coupling to guide rails (17).

2. Clamp (1) for tubular piping, according to claim 1, **characterised in that** the central portion (2) is provided with at least one aperture (7, 8) which endows it with a relative flexibility.

3. Clamp (1) for tubular piping, according to claim 1, **characterised in that** the support tab (9) has anchoring means (30) to the fastening surface.

4. Clamp (1) for tubular piping, according to claim 1, **characterised in that** the first end portion (3) has an essentially flat shape and has one orifice (10).

5. Clamp (1) for tubular piping, according to claim 1, **characterised in that** second end portion (4) is essentially "L" shaped, and has a first section (11) and a second section (12) with one orifice (13).

6. Clamp (1) for tubular piping, according to claim 5, **characterised in that** the second end portion (4) has a projection (22) that extends in the opposite direction to the support surface in an essentially parallel way to the first section (11) of the end portion (4).

7. Clamp (1) for tubular piping, according to claim 6, **characterised in that** the means (14) of coupling to the guide rail (17) comprises two notches (23, 24) arranged in the respective laterals of the projection (22).

8. Clamp (1) for tubular piping, according to any one of the previous claims, **characterised in that** at least the inner face of the central portion (2) is provided with protection means (25) against vibration noise.

9. Clamp (1) for tubular piping, according to claim 8, **characterised in that** the protection means (25) against vibration noise comprises a profile (26) of plastic material provided with extensions (27, 28) which configure two respective lateral grooves capable of coupling to the corresponding lateral ends of the central portion (2).

## Patentansprüche

1. Klemme (1) für rohrförmige Leitungen eines aus einem Stück Metallstreifen gebildeten Typs, die einen zentralen Abschnitt (2) mit einem im Wesentlichen gekrümmten Aufbau, einen ersten Endabschnitt (3) und einen zweiten Endabschnitt (4) umfasst, wobei die ersten und zweiten Endabschnitte (3, 4) jeweils mit den entsprechenden Enden (5, 6) des zentralen Abschnitts (2) verbunden sind; und wobei alle in einer solchen Weise angepasst sind, dass zum Befestigen einer rohrförmigen Leitung durch die Klemme die ersten und zweiten Endabschnitte (3, 4) im Wesentlichen parallel übereinander gelagert werden und im Wesentlichen tangential zu dem Klemmenkörper liegen, wobei der zentrale Abschnitt (2) mit einer Tragezunge (9) ausgestattet ist, die einen Abstand von der rohrförmigen Leitung mit Bezug auf die Befestigungsoberfläche hält; **dadurch gekennzeichnet, dass** sie zwei entsprechende Einkerbungen (15, 16) umfasst, die in einem ersten Teil (11) des zweiten Endabschnitts (4) angeordnet sind, um diese mit Führungsschienen (17) zu koppeln.

2. Klemme (1) für rohrförmige Leitungen nach Anspruch 1, **dadurch gekennzeichnet, dass** der zentrale Abschnitt (2) mit zumindest einer Öffnung (7, 8) versehen ist, die diesen mit einer relativen Flexibilität ausstattet.

3. Klemme (1) für rohrförmige Leitungen nach Anspruch 1, **dadurch gekennzeichnet, dass** die Tragezunge (9) Verankerungsmittel (30) an die Befestigungsoberfläche aufweist.

4. Klemme (1) für rohrförmige Leitungen nach Anspruch 1, **dadurch gekennzeichnet, dass** der erste Endabschnitt (3) eine im Wesentlichen flache Form und eine Öffnung (10) aufweist.

5. Klemme (1) für rohrförmige Leitungen nach Anspruch 1, **dadurch gekennzeichnet, dass** der zweite Endabschnitt (4) im Wesentlichen "L"-förmig ist, und einen ersten Teil (11) und einen zweiten Teil (12) mit einer Öffnung (13) aufweist.

6. Klemme (1) für rohrförmige Leitungen nach Anspruch 5, **dadurch gekennzeichnet, dass** der zweite Endabschnitt (4) einen Vorsprung (22) aufweist, der sich in der entgegengesetzten Richtung zu der Trageoberfläche in einer im Wesentlichen parallelen Richtung zu dem ersten Teil (11) des Endabschnitts (4) erstreckt.

7. Klemme (1) für rohrförmige Leitungen nach Anspruch 6, **dadurch gekennzeichnet, dass** das Mittel (14) zum Koppeln mit der Führungsschiene (17) zwei Einkerbungen (23, 24) umfasst, die in entsprechenden Seiten des Vorsprungs (22) angeordnet sind.

8. Klemme (1) für rohrförmige Leitungen nach einem der vorstehenden Ansprüche, **dadurch gekennzeichnet, dass** zumindest die Innenfläche des zentralen Abschnitts (2) mit Schutzmitteln (25) gegen Vibrationslärm versehen ist.

9. Klemme (1) für rohrförmige Leitungen nach Anspruch 8, **dadurch gekennzeichnet, dass** die Schutzmittel (25) gegen Vibrationslärm ein Profil (26) aus Kunststoffmaterial umfasst, das mit Fortsätzen (27, 28) versehen ist, welche zwei entsprechende seitliche Rillen festlegen, die in der Lage sind, die entsprechenden seitlichen Enden des zentralen Abschnitts (2) einzufassen.

## Revendications

1. Attache (1) destinée à une tuyauterie tubulaire, du type formé d'une pièce de bande métallique, qui comprend une partie centrale (2) de configuration sensiblement incurvée, une première partie d'extrémité (3) et une seconde partie d'extrémité (4), lesdites première et seconde parties d'extrémité (3, 4) étant raccordées à chacune des extrémités (5, 6) respectives de la partie centrale (2) ; toutes étant adaptées de telle sorte que lorsque l'attache fixe une tuyauterie tubulaire, la première et la seconde parties d'extrémités (3, 4) sont superposées d'une façon sensiblement parallèle et sensiblement tangentielle au corps de l'attache, dans laquelle la partie centrale (2) comprend une languette de support (9) qui maintient la distance de la tuyauterie tubulaire par rapport à la surface de fixation ; **caractérisée en ce qu'**elle comprend deux encoches (15, 16) respectives agencées dans une première section (11) de la seconde partie d'extrémité (4) pour leur accouplement aux glissières (17).

2. Attache (1) destinée à une tuyauterie tubulaire selon la revendication 1, **caractérisée en ce que** la partie centrale (2) comprend au moins une ouverture (7, 8) qui la dote d'une flexibilité relative.

3. Attache (1) destinée à une tuyauterie tubulaire selon la revendication 1, **caractérisée en ce que** la languette de support (9) comprend un moyen de fixation (30) sur la surface de fixation.

4. Attache (1) destinée à une tuyauterie tubulaire selon la revendication 1, **caractérisée en ce que** la première partie d'extrémité (3) a une forme sensiblement plate et comprend un orifice (10).

5. Attache (1) destinée à une tuyauterie tubulaire selon la revendication 1, **caractérisée en ce que** la seconde partie d'extrémité (4) a sensiblement une forme en L, et comprend une première section (11) et une seconde section (12) comprenant un orifice (13).

6. Attache (1) destinée à une tuyauterie tubulaire selon la revendication 5, **caractérisée en ce que** la seconde partie d'extrémité (4) comprend une saillie (22) qui s'étend dans la direction opposée à la surface de support d'une façon sensiblement parallèle à la première section (11) de la partie d'extrémité (4).

7. Attache (1) destinée à une tuyauterie tubulaire selon la revendication 6, **caractérisée en ce que** le moyen (14) d'accouplement à la glissière (17) comprend deux encoches (23, 24) agencées dans les côtés respectifs de la saillie (22).

8. Attache (1) destinée à une tuyauterie tubulaire selon l'une quelconque des revendications qui précèdent, **caractérisée en ce qu'**au moins la face intérieure de la partie centrale (2) comprend des moyens de protection (25) contre le bruit des vibrations.

9. Attache (1) destinée à une tuyauterie tubulaire selon la revendication 8, **caractérisée en ce que** les moyens de protection (25) contre le bruit des vibrations comprenant un profil (26) de matière plastique comprenant des extensions (27, 28) qui configurent deux rainures latérales respectives capables de s'accoupler aux extrémités latérales correspondantes de la partie centrale (2).
